# EUROPEAN PATENT SPECIFICATION

(11) **EP 3 653 910 B1**
(45) Date of publication and mention of the grant of the patent: **16.06.2021**
(21) Application number: 18206854.4
(22) Date of filing: 16.11.2018
(51) Int. Cl.: F16J 15/02, F16J 15/06, E21D 11/38

(54) **ANCHORED WATERPROOF SEALING GASKET AND METHOD FOR FIXING THE SAME ONTO STEEL MOULD**
VERANKERTE WASSERDICHTE DICHTUNG UND VERFAHREN ZUR BEFESTIGUNG DAVON AUF EINER STAHLFORM
JOINT D'ÉTANCHÉITÉ ÉTANCHE ANCRÉ ET SON PROCÉDÉ DE FIXATION SUR UN MOULE EN ACIER

(43) Date of publication of application: 20.05.2020
(73) Proprietor: Shanghai Lingyun Civil Engineering Consulting Co., Ltd., Shanghai (CN); Shanghai Tunnel Engineering & Rail Transit Design & Research Institute, Shanghai (CN); Jiangyin Haida Rubber and Plastic Co., Ltd., Jiangyin City, Jiangsu (CN); Shanghai Urban Construction Design & Research Institute (Group) Co., Ltd., Shanghai (CN); Gu, Yun, Shanghai (CN)
(72) Inventor: BAI, Yun, Shanghai, Shanghai (CN); ZHOU, Chen, Shanghai, Shanghai (CN); LIU, Liwei, Shanghai, Shanghai (CN); ZHONG, Yuanyuan, Shanghai, Shanghai (CN); LU, Ming, Shanghai, Shanghai (CN); JIANG, Hong, Shanghai, Shanghai (CN); ZHU, Zuxi, Shanghai, Shanghai (CN); GU, Yun, Shanghai, Shanghai (CN)
(74) Representative: Branca, Emanuela

(56) References cited:
- DE-A1-102012 106 462
- DE-B3-102006 005 326

## Description

### TECHNICAL FIELD

The present invention relates to the technical field of shield tunnel waterproofing, and in particular to an anchored waterproof sealing gasket and a method for fixing the same onto a steel mould.

### BACKGROUND

With the establishment and development of shield tunnels such as deep shield draining and river or sea crossing, the design and construction of shield tunnels are subjected to unfavorable factors such as high water pressure, which puts higher requirements on the operational performance of a tunnel-sealing waterproof material. Segment joint waterproofing in the shield tunnel is the focus of waterproof design work. The main measure for segment joint waterproofing in the shield tunnel is the use of a waterproof sealing material. An EPDM (ethylene propylene diene monomer) rubber elastic sealing gasket has great durability and waterproof performances, and its comprehensive performance and market price in rubber materials make it more suitable for use in underground engineering. Therefore, the EPDM rubber elastic sealing gasket is considered to be the host material in the entire underground-engineering waterproof system.

The conventional rubber elastic sealing gasket is made by adhering a rubber gasket onto a groove reserved on a segment via a special glue after casting of the segment is completed. This method is liable to causing poor pasting and thus resulting in water seepage between a sealing strip and the concrete. In recent years, a novel sealing gasket-anchored waterproof sealing gasket has been applied in many tunneling projects in European and American countries. The anchored waterproof sealing gasket differs from a common elastic rubber sealing gasket in that there is one or two additional anchor feet at the lower portion of the sealing gasket thereof, so that it can be anchored into the concrete during the segment production process, thereby eliminating the conventional procedure of bonding the sealing gasket into the groove before the segment is lowered down into the well.

Although the anchored waterproof sealing gasket has been successfully applied in many tunneling projects abroad, its application in China is still blank. The engineering application of the segments of the anchored waterproof sealing gasket needs to solve a series of problems such as the production, maintenance and transportation of the segments, and it is a key affecting the segment quality whether the anchored waterproof sealing gasket is successfully fixed on the steel mould during production of the segments, so that it is a need to seek a method capable of successfully fixing the anchored waterproof sealing gasket onto the steel mould.

The patent application DE 102012106462 A1 discloses the formwork mold assembly (1) has holder (4) that holds formwork mold (2). A sealing strip (3) is releasably held and projected partially into interior of formwork mold. The sealing strip is attached on wall of holder contacting back side of recess (12) and/ or projection (9a), opposite to base side (8) of anchoring foot (11). A wall (6) of holder has recess that is provided complementary to protrusion and/or projection.

The patent DE 102006005326 B3 discloses the concrete part is cast in a mold (1) which has to be vibrated when the material is inserted in order to increase its density. A sealing element (3) in the shape of a ring is attached to the lower area of the mold (1), either made of a ferromagnetic material or provided with magnetic elements. The elements can be several short magnetic strips (4), a few bundles of steel wool (5), steel balls (6), or a metal clamping ring (7). An independent claim is given for the use of the specific sealing element.

### SUMMARY

In order to solve the above technical problem, the present invention provides an anchored waterproof sealing gasket and a method for fixing the same onto a steel mould, which can realize successful fixing of the anchored waterproof sealing gasket on the steel mould, ensuring the production quality of segments of the anchored waterproof sealing gasket.

To achieve the above objective, the present invention provides the following technical solutions:
The present invention provides an anchored waterproof sealing gasket according to claim 1.

Optionally, the size of the end of the anchor foot away from the body is larger than that of the end thereof adjacent to the body.

Optionally, there are one or more anchoring feet.

Optionally, there are one or more notches.

Optionally, the side of the side wing facing the notch is a planar surface, and the side of the side wing facing the anchor foot is a wedge-shaped surface.

Optionally, the wedge head is a wedge-shaped projection that is protruded from the body.

The present invention further provides a method for fixing the anchored waterproof sealing gasket of any of claims 1-6 onto a steel mould, and the method includes the following steps:
(1). processing a steel mould according to the size of a required segment, and reserving a groove on the steel mould;
(2). placing the anchored waterproof sealing gasket equipped with the magnetic strip into the reserved groove; and
(3). casting the concrete into the steel mould, and opening the steel mould after setting of the concrete to remove the magnetic strip.

The present invention achieves the following technical effects compared to the prior art:
(1) Simple operation. The anchored waterproof sealing gasket is fixed onto the steel mould through magnetic adsorption of a magnetic strip, without any other special operation, and thus is relatively simple and convenient.
(2) Readily available materials. The fixation of the anchored waterproof sealing gasket on the steel mould is achieved through magnetic adsorption of the magnetic strip, where the required material magnetic strip is simple and easy to obtain.

### BRIEF DESCRIPTION OF THE DRAWING

To describe the technical solutions in the embodiments of the present invention or in the prior art more clearly, the following briefly describes the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a schematic structural view of a steel mould in the anchored waterproof sealing gasket and the method for fixing the same onto the steel mould according to the present invention;
FIG. 2 is a schematic structural view of the anchored waterproof sealing gasket in the anchored waterproof sealing gasket and the method for fixing the same onto the steel mould according to the present invention;
FIG. 3 is another schematic structural view of the anchored waterproof sealing gasket in the anchored waterproof sealing gasket and the method for fixing the same onto the steel mould according to the present invention;
FIG. 4 is a schematic structural view of the anchored waterproof sealing gasket fixed on the steel mould, in the anchored waterproof sealing gasket and the method for fixing the same onto the steel mould according to the present invention; and
FIG. 5 is another schematic structural view of the anchored waterproof sealing gasket fixed on the steel mould, in the anchored waterproof sealing gasket and the method for fixing the same onto the steel mould according to the present invention.

Description of reference numerals: 1-steel mould, 2-anchor foot, 3-side wing, 4-wedge head, 5-notch, and 6-magnetic strip.

### DETAILED DESCRIPTION

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1:

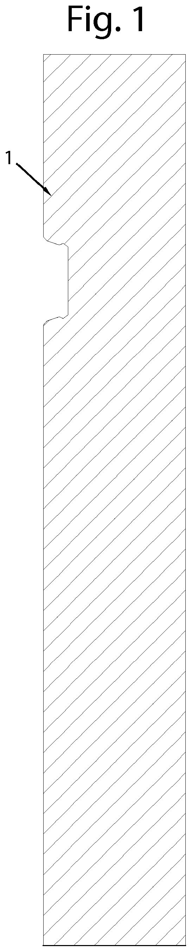

As shown in FIG. 1, this embodiment provided an anchored waterproof sealing gasket, which included a body, where one end of the body was provided with an outwardly-protruded anchor foot 2, and the other end of the body was provided with a notch 5 at the middle portion and provided with wedge heads 4 at two sides thereof, and the middle section of the body was provided with outwardly-protruded side wings 3 at both sides thereof.

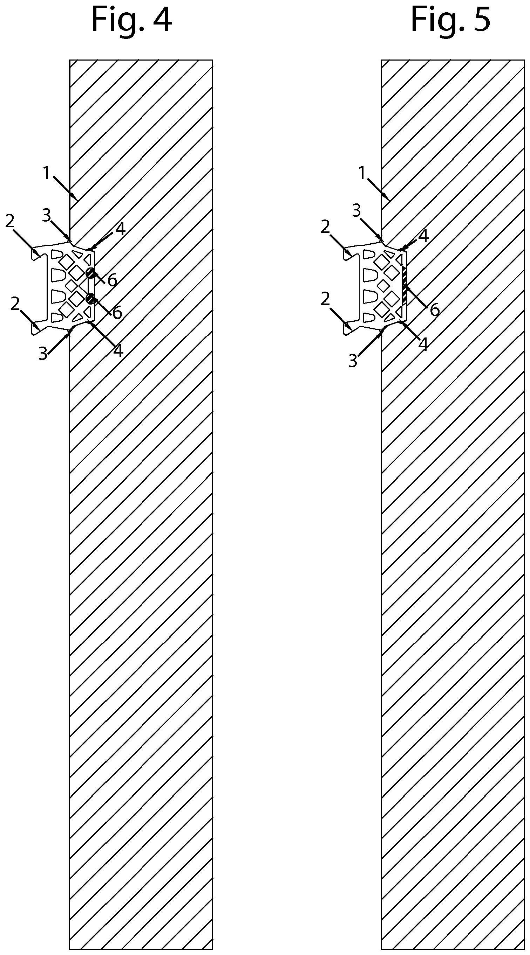

In this specific embodiment, as shown in FIGs. 1-5, the size of the end of the anchor foot 2 away from the body was larger than that of the end thereof adjacent to the body. There were two anchor feet 2. After the casting was completed, the anchor foot 2 was tightly wrapped by the concrete, so that the anchored waterproof sealing gasket would not be separated from the segments to cause falling off of the anchored waterproof sealing gasket, thereby enabling great improvement in segment quality and the waterproof-sealing performance of the segment.

The edges of the notch 5 were protruded towards the middle portion of the notch 5. This facilitated placement of the magnetic strip 6, so that the magnetic strip 6 could be temporarily fixed in the notch 5.

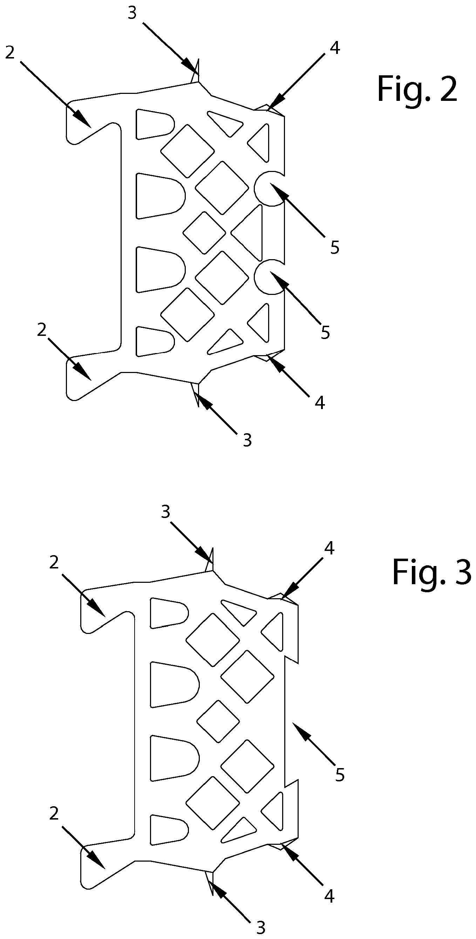

As shown in FIGs. 2 and 3, there are one or two notches 5. The appropriate number or shape of the notch 5 could be selected according to the shape and size of a different anchored waterproof sealing gasket.

The side of the side wing 3 facing the notch 5 was a planar surface, and the side of the side wing 3 facing the anchor foot 2 was a wedge-shaped surface. When the anchored waterproof sealing gasket was mounted on the steel mould 1, the side of the side wing 3 which was a planar surface came into intimate contact with the inner surface of the steel mould 1, so as to prevent the concrete from flowing into the reserved groove during casting of the concrete.

The wedge head 4 was a wedge-shaped projection that was protruded from the body. It was used for chucking the anchored waterproof sealing gasket into the steel mould 1, such that the anchored waterproof sealing gasket was more stable within the steel mould 1, thereby improving the quality of the segment.

This embodiment further provided a method for fixing the anchored waterproof sealing gasket onto a steel mould 1, which included the following steps:
(1). processing the steel mould 1 according to the size of the required segment, and reserving a groove on the steel mould 1, where the shape of the reserved groove was the same as that of the right side of the anchored waterproof sealing gasket, i.e., being the same as that of a body at the side of a side wing 3 which is a planer surface;
(2). placing a magnetic strip 6 into a notch 5 of the anchored waterproof sealing gasket, and placing the anchored waterproof sealing gasket equipped with the magnetic strip 6 into the reserved groove; and
(3). casting the concrete into the steel mould 1, and opening the steel mould 1 after setting of the concrete to remove the magnetic strip 6.

Specific embodiments are applied in this specification to describe the principle and implementations of the present invention. The description of the aforementioned embodiments is only used for facilitating understanding of the method and the core idea of the present invention; and meanwhile, for those of ordinary skills in the art, there will be changes in specific implementations and application scope in accordance with the concept of the present invention. In conclusion, the content of this specification shall not be construed as a limitation to the invention, which shall be limited only by the scope of the claims.

## Claims

1. An anchored waterproof sealing gasket, comprising a body, wherein one end of the body is provided with an outwardly-protruded anchor foot (2), and the other end of the body is provided with a notch (5) at the middle portion and provided with wedge heads (4) at two sides thereof, and the middle section of the body is provided with outwardly-protruded side wings (3) at both sides thereof, edges of the notch (5) are protruded towards a middle portion of the notch (5), **characterised by** a magnetic strip (6) being placed into the notch (5) so as to allow that the anchored waterproof sealing gasket is fixed on a steel mould (1) through magnetic adsorption of the magnetic strip (6).

2. The anchored waterproof sealing gasket of claim 1, wherein the size of the end of the anchor foot (2) away from the body is larger than that of the end thereof adjacent to the body.

3. The anchored waterproof sealing gasket of claim 1, wherein there are one or more anchoring feet (2).

4. The anchored waterproof sealing gasket of claim 1, wherein there are one or more notches (5).

5. The anchored waterproof sealing gasket of claim 1, wherein the side of the side wing (3) facing the notch (5) is a planar surface, and the side of the side wing (3) facing the anchor foot (2) is a wedge-shaped surface.

6. The anchored waterproof sealing gasket of claim 1, wherein the wedge head (4) is a wedge-shaped projection that is protruded from the body.

7. A method for fixing the anchored waterproof sealing gasket of any of claims 1-6 onto a steel mould (1), comprising the following steps:
(1). processing a steel mould (1) according to the size of a required segment, and reserving a groove on the steel mould (1);
(2). placing the anchored waterproof sealing gasket equipped with the magnetic strip (6) into the reserved groove; and
(3). casting the concrete into the steel mould (1), and opening the steel mould (1) after setting of the concrete to remove the magnetic strip (6).

## Patentansprüche

1. Verankerte wasserdichte Dichtung, die einen Körper umfasst, wobei ein Ende des Körpers mit einem nach außen vorstehenden Ankerfuß (2) versehen ist und das andere Ende des Körpers mit einer Ausnehmung (5) im mittleren Teil versehen ist und mit Keilköpfen (4) an zwei Seiten davon versehen ist, und der mittlere Abschnitt des Körpers mit nach außen vorstehenden Seitenflügeln (3) an beiden Seiten davon versehen ist, wobei die Ränder der Ausnehmung (5) zu einem mittleren Teil der Ausnehmung (5) hin vorstehen, **gekennzeichnet durch**
die Anordnung eines Magnetstreifens (6) in die Ausnehmung (5), um zu ermöglichen, dass die verankerte wasserdichte Dichtung an einer Stahlform (1) durch magnetische Adsorption des Magnetstreifens (6) befestigt wird.

2. Verankerte wasserdichte Dichtung gemäß Anspruch 1, wobei die Größe des vom Körper entfernten Endes des Ankerfußes (2) größer als die des an den Körper angrenzenden Endes ist.

3. Verankerte wasserdichte Dichtung gemäß Anspruch 1, wobei ein oder mehrere Verankerungsfüße (2) vorhanden sind.

4. Verankerte wasserdichte Dichtung gemäß Anspruch 1, wobei eine oder mehrere Ausnehmungen (5) vorhanden sind.

5. Verankerte wasserdichte Dichtung gemäß Anspruch 1, wobei die Seite des Seitenflügels (3), die der Ausnehmung (5) zugewandt ist, eine ebene Fläche ist, und die Seite des Seitenflügels (3), die dem Ankerfuß (2) zugewandt ist, eine keilförmige Fläche ist.

6. Verankerte wasserdichte Dichtung gemäß Anspruch 1, wobei der Keilkopf (4) ein keilförmiger Vorsprung ist, der von dem Körper vorsteht.

7. Verfahren zum Befestigen der verankerten wasserdichten Dichtung gemäß einem der Ansprüche 1-6 an einer Stahlform (1), welches folgende Schritte umfasst:
(1). Bearbeiten einer Stahlform (1) gemäß der Größe eines erforderlichen Segments, und Vorhalten einer Nut an der Stahlform (1);
(2). Anordnen der verankerten wasserdichten Dichtung, die mit dem Magnetstreifen (6) ausgerüstet ist, in der vorgehaltenen Nut; und
(3). Gießen des Betons in die Stahlform (1) und Öffnen der Stahlform (1) nach dem Abbinden des Betons, um den Magnetstreifen (6) zu entfernen.

## Revendications

1. Garniture d'étanchéité à ancrage, comprenant un corps, dans lequel une extrémité du corps est pourvue d'un pied d'ancrage (2) faisant saillie vers l'extérieur, et l'autre extrémité du corps est pourvue d'une encoche (5) au niveau de la partie médiane et pourvue de têtes de coin (4) sur ses deux côtés, et la section médiane du corps est pourvue d'ailes latérales (3) faisant saillie vers l'extérieur sur ses deux côtés, les bords de l'encoche (5) font saillie vers une partie médiane de l'encoche (5), **caractérisée par** une bande magnétique (6) placée dans l'encoche (5) de manière à permettre que la garniture d'étanchéité à ancrage soit fixée sur un moule en acier (1) par adsorption magnétique de la bande magnétique (6).

2. Garniture d'étanchéité à ancrage selon la revendication 1, dans laquelle la taille de l'extrémité du pied d'ancrage (2) éloignée du corps est plus grande que celle de son extrémité adjacente au corps.

3. Garniture d'étanchéité à ancrage selon la revendication 1, dans laquelle il y a un ou plusieurs pieds d'ancrage (2).

4. Garniture d'étanchéité à ancrage selon la revendication 1, dans laquelle il y a une ou plusieurs encoches (5).

5. Garniture d'étanchéité à ancrage selon la revendication 1, dans laquelle le côté de l'aile latérale (3) faisant face à l'encoche (5) est une surface plane, et le côté de l'aile latérale (3) faisant face au pied d'ancrage (2) est une surface cunéiforme.

6. Garniture d'étanchéité à ancrage selon la revendication 1, dans laquelle la tête de coin (4) est une projection cunéiforme qui fait saillie par rapport au corps.

7. Procédé de fixation d'une garniture d'étanchéité à ancrage selon l'une quelconque des revendications 1 à 6 sur un moule en acier (1), comprenant les étapes suivantes :
(1). traiter un moule en acier (1) selon la taille d'un segment requis, et réserver une rainure sur le moule en acier (1) ;
(2). placer la garniture d'étanchéité à ancrage équipée de la bande magnétique (6) dans la rainure réservée ; et
(3). couler le béton dans le moule en acier (1) et ouvrir le moule en acier (1) après la prise du béton pour retirer la bande magnétique (6).
